# EUROPÄISCHE PATENTSCHRIFT

(11) **EP 1 735 171 B1**
(45) Veröffentlichungstag und Bekanntmachung des Hinweises auf die Patenterteilung: **19.09.2007**
(21) Anmeldenummer: 05736837.5
(22) Anmeldetag: 11.03.2005
(51) Int. Cl.: B60J 7/14

(54) **LENKERKINEMATIK FÜR EIN FAHRZEUG-HARDTOP**
ROD KINEMATICS FOR A HARDTOP OF A VEHICLE
CINEMATIQUE DE DIRECTION POUR TOIT RIGIDE DE VEHICULE CABRIOLET

(30) Priorität: 16.04.2004 DE 102004019244
(43) Veröffentlichungstag der Anmeldung: 27.12.2006
(73) Patentinhaber: CTS Fahrzeug-Dachsysteme GmbH, 21079 Hamburg (DE)
(72) Erfinder: PAPENDORF, Marcus, 74354 Besigheim (DE); BRUDER, Gernot, 76131 Karlsruhe (DE)
(74) Vertreter: Wittner, Walter
(86) Internationale Anmeldenummer: PCT/EP2005/002584
(87) Internationale Veröffentlichungsnummer: WO 2005/105499

(56) Entgegenhaltungen:
- EP-A- 1 285 795
- EP-A- 1 361 966
- DE-A1- 10 108 493
- DE-A1- 10 163 315
- DE-A1- 10 218 874

## Beschreibung

Die Erfindung betrifft eine Lenkerkinematik für ein Fahrzeug-Hardtop gemäß dem Oberbegriff des Anspruches 1.

Lenkerkinematiken der vorgenannten Art sind aus der DE 101 08 493 A1 bekannt, und zwar für ein dreiteiliges Fahrzeug-Hardtop, das über zwei Hauptlenker getragen ist. Diesen Hauptlenkern ist karosserieseitig ein Hauptlager zugeordnet, und dieses Hauptlager weist bezogen auf die Fahrzeuglängsrichtung eine hintere Anlenkung für den Hauptlenker auf, der als C-Säulenlenker dem hinteren Dachteil zugeordnet ist, wobei diese Anlenkung als zur Karosserie lagefeste Lagerstelle des C-Säulenlenkers ausgestaltet ist. Die vordere Anlenkung umfasst für den zugehörigen Hauptlenker einen Zwischenlenker, der einen zur Karosserie lagefesten Anlenkpunkt aufweist und der in einem Verbindungspunkt mit dem Hauptlenker schwenkbar verbunden ist, wobei am Zwischenlenker ein Verbindungslenker angreift, der als Antriebslenker über ein Lenkergetriebe mit dem den C-Säulenlenker bildenden Hauptlenker verbunden ist. Über den Zwischenlenker ergibt sich für den an diesem angelenkten Hauptlenker in Abhängigkeit von der Stellung des Zwischenlenkers eine translatorische Verlagerung bei Schwenkbewegungen des Zwischenlenkers, die dazu genutzt wird, in der ersten Phase der Öffnungsbewegung des Hardtops dieses in seinem vorderen Anschlussbereich zur Windschutzscheibe auszuheben.

Ferner ist es aus der EP 0 974 480 A1 für faltbare Fahrzeugverdecke bekannt, das deren Hauptlenker tragende Hauptlager als gegenüber der Karosserie schwenkbare Konsole zu gestalten, die eine nach oben angestellte, bezüglich der Anlenkungen der Hauptlenker angehobene Lage bei geschlossenem Verdeck und während des Zusammenfaltens des Verdecks einnimmt und die zusammen mit dem zusammengefalteten Verdeck in eine untere Schwenklage zu überführen ist, in der das Verdeck im Verdeckkasten abgelegt ist. Dadurch, dass die das Hauptlager bildende Konsole bei geschlossenem Verdeck wie auch während des Zusammenfaltens des Verdeckes aufgestellt ist und die Anlenkungen der Hauptlenker somit gegenüber der Karosserie angehoben sind, kann die Faltung des Verdecks weitgehendst oberhalb der Karosserie und damit ohne Einschränkungen durch Karosserie und karosserieseitige Aggregateteile erfolgen, und für die Verschwenkung und Unterbringung des Verdecks im Verdeckkasten muss lediglich noch der Raum freigehalten werden, der für das zum Paket zusammengefaltete Verdeck erforderlich ist.

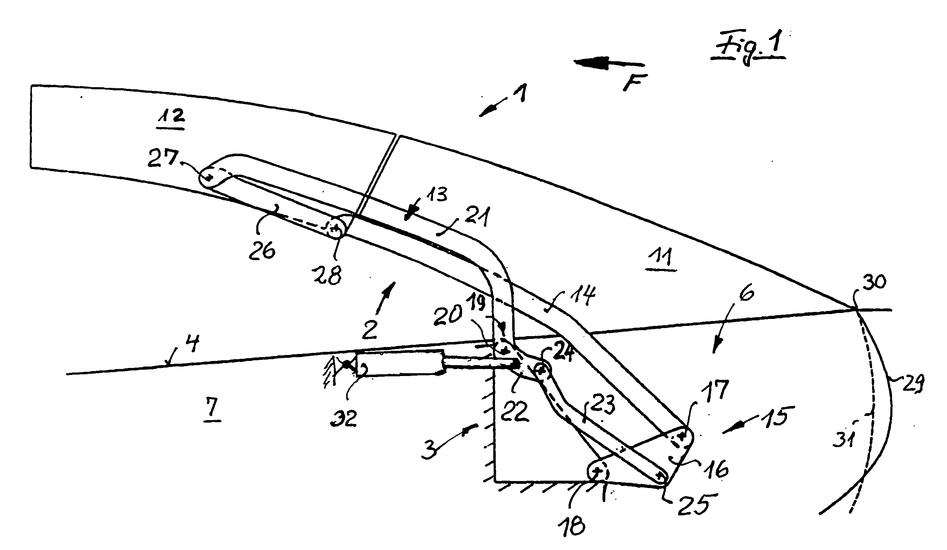

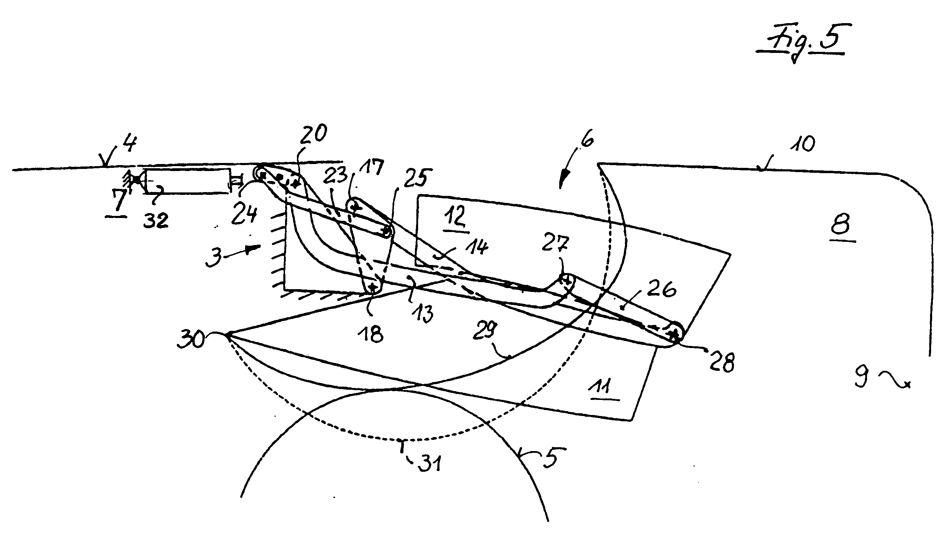

Aus der DE 102 48 350 A1 ist ein Fahrzeug-Hardtop mit einem hinteren und einem in der Schließlage davor liegenden, vorderen Dachteil bekannt. Der hintere Dachteil umfasst eine Heckscheibe und seitliche C-Säulenlenker, wobei die Heckscheibe, oder ein dieser zugeordneter Rahmen, zu den C-Säulenlenkern verstellbar ist. Die C-Säulenlenker und die Heckscheibe, bzw. der Heckscheibenrahmen, bilden eine, den vorderen Dachteil tragende Lenkerkinematik und sind ihrerseits jeweils über gegen die Karosserie nach unten auskragende Ausleger schwenkbar mit der Karosserie verbunden, wobei die Verbindung zur Karosserie in der Ausgestaltung gemäß Fig. 1 bis 13 über eine zur Karosserie längsverstellbare Konsole erfolgt, die Lagerstellen für die Ausleger aufweist. Untereinander sind die Ausleger in ihrer Verstellbarkeit zur Konsole über ein Koppelglied antriebsverbunden, so dass ein Antrieb pro Fahrzeugseite für eine gleichmäßige Schwenkbarkeit der Dachteile um die der Konsole zugeordneten Lagerstellen der Ausleger ausreichend ist. Über die zusätzliche Längsverstellung der Konsole wird das Hardtop in seiner Schließlage insgesamt, und ohne Verstellung der Dachteile zueinander, so weit verlagert, dass eine Zapfenverbindung außer Eingriff kommt, die durch dem vorderen Dachteil zugeordnete Zapfen und dem Windschutzscheibenrahmen zugeordnete Aufnahmen für die Zapfen gebildet ist.

Aus der EP 1 361 966 A ist für ein verstellbares Fahrzeugdach eine Lösung bekannt, durch die das als Hardtop mit zwei Dachteilen ausgebildete Dach mit geringen Stellkräften aus seinen Endlagen zu verstellen ist. Der hintere, dem C-Säulenlenker zugeordnete Dachteil ist hierzu über einen Antriebslenker und einen Stützlenker karosserieseitig angebunden. Der Antriebslenker ist über einen karosserieseitig abgestützten Stellzylinder verstellbar, und der als Winkelhebel ausgebildete Stützlenker ist über ein karosserieseitig abgestütztes Federelement, entsprechend der jeweiligen Endlage im Sinne eines Aushebens aus dieser Endlage, beaufschlagt. Die den vorderen Dachteil tragende Lenkerkinematik ist durch den C-Säulenlenker und einen weiteren Hauptlenker gebildet, der über einen Zwischenlenker ebenfalls an der Karosserie angebunden und über einen Koppellenker mit dem Antriebslenker antriebsverbunden ist.

Mit dem Ziel der Verringerung des Raumbedarfes für das zwischen Kofferraum und Sitzraum des Fahrzeuges abzulegende, mehrteilige und öffnungsfähige Fahrzeugdach ist bei der EP 1. 285 795 A2 eine verstellbare, das Dach tragende Konsole vorgesehen, die ihrerseits an der Karosserie über ein Viergelenk abgestützt ist, dessen einer Lenker über einen Stellantrieb beaufschlagt ist.

Zur Konsole ist der hintere Dachteil schwenkbar angelenkt und über einen weiteren Stellantrieb verstellbar, der über einen gegen die Konsole abgestützten Stellzylinder gebildet ist. Die Konsole weist des Weiteren einen Ausleger auf, an dem über ein weiteres Viergelenk der vordere Dachteil angelenkt ist, wobei der hintere Lenker dieses Viergelenks im Bereich seiner Anlenkung zum Ausleger der Konsole einen Kragarm aufweist, an dem ein zur Karosserie angelenkter Stützlenker angreift, so dass in Abhängigkeit von der Verstellbewegung der Konsole der vordere Dachteil zum hinteren Dachteil verstellt wird, der seinerseits unabhängig hiervon gegen die Konsole verstellbar ist.

Auch bei der DE 101 63 315 A1 steht der Gedanke einer raumsparenden Ablage des mehrteiligen, öffnungsfähigen Daches im Vordergrund, dessen hinterer Dachteil dem C-Säulenlenker zugeordnet ist, der als Teil eines Viergelenks mit einem davor liegenden Steuerlenker das vordere Dachteil trägt. Die Lenker des Viergelenks sind an einer Konsole angeordnet, die ihrerseits über eine weitere Viergelenkanordnung mit der Karosserie verbunden ist, wobei der C-Säulenlenker im Bereich seiner Anlenkung zur Konsole einen Kragarm aufweist, der über einen Zwischenlenker schwenkbar mit dem vorderen Lenker der zwischen Karosserie und Konsole vorgesehenen Viergelenkanordnung verbunden ist.

Schließlich ist es aus der DE 102 18 874 A1 für ein mehrteiliges Hardtop mit dessen hinterem Dachteil zugeordneter Heckscheibe bekannt, zur Reduzierung des Platzbedarfes für das Dach in seiner in den Fahrzeuginnenraum nach hinten abgeschwenkten Ablagestellung die Heckscheibe gegenüber dem umschließenden Teil des hinteren Dachteiles zu verstellen. Hierzu ist die Heckscheibe gegenüber dem dem hinteren Dachteil zugehörigen C-Säulenlenker über eine Viergelenkanordnung abgestützt, die ihrerseits über einen Steuerhebel mit dem vorderen Dachteil verbunden ist, der mit der Karosserie über eine weitere Viergelenkanordnung verbunden ist, deren einer Lenker durch den C-Säulenlenker gebildet ist, so dass durch Verschwenkung des vorderen Dachteiles gegenüber dem hinteren Dachteil über den Steuerhebel die die Heckscheibe tragende Viergelenkanordnung verstellt und die Heckscheibe gegenüber dem umschließenden Teil des hinteren Dachteiles, und damit auch gegenüber dem C-Säulenlenker translatorisch und rotatorisch verstellt wird, was eine höhere Packungsdichte für das abgelegte Dach ermöglicht.

Der Erfindung liegt die Aufgabe zugrunde, eine Lenkerkinematik für ein Fahrzeug-Hardtop der eingangs genannten Art dahingehend auszugestalten, dass der hintere Dachteil während der Ablage des Hardtops im an den Fahrzeuginsassenraum anschließenden rückwärtigen Karosseriebereich, so insbesondere innerhalb des Kofferraums oder eines im Kofferraumbereich liegenden Verdeckkastens, eine abgeflachte Bewegungsbahn durchläuft und dadurch zu in diesem Bereich liegenden Karosserie- und/oder karosserieseitigen Aggregateteilen, insbesondere zu den Radhäusern der Hinterräder und in diesem Bereich angeordneten Teilen, wie beispielsweise zum Tankstutzen, ausreichenden Freiraum aufweist.

Erreicht wird dies durch die Ausgestaltung der Lenkerkinematik entsprechend den Merkmalen des Anspruches 1, demzufolge der Zwischenlenker in der Anlenkung des C-Säulen-Lenkers zum Hauptlager vorgesehen ist, so dass sich, bezogen auf eine Ausgestaltung mit zur Karosserie lagefestem Anlenkpunkt des C-Säulen-Lenkers, eine abgeflachte Bewegungsbahn mit geringer Eintauchtiefe in den Ablageraum für das Verdeck erreichen lässt, und zwar zumindest ohne wesentliche Vergrößerung der in Fahrzeuglängsrichtung gemessenen Länge der vom hinteren unteren Eckpunkt des hinteren Dachteiles beschriebenen Bewegungsbahn.

Bezüglich der weiteren Ausgestaltung der Lenkerkinematik erweist es sich als zweckmäßig, die Anlenkungen der Hauptlenker zum Hauptlager höhenversetzt anzuordnen, wobei der der hinteren Anlenkung zugeordnete Hauptlagerpunkt bevorzugt tiefer als der der vorderen Anlenkung zugeordnete Hauptlagerpunkt liegt und den hauptlagerseitigen Anlenkpunkt für den Zwischenlenker bildet. Ausgehend von diesem Anlenkpunkt erstreckt sich der Zwischenlenker, bezogen auf das Fahrzeug-Hardtop in geschlossener Lage, bevorzugt nach hinten, und insbesondere schräg nach hinten und oben, so dass der in Fahrzeuglängsrichtung gemessene Abstand der Hauptlagerpunkte kleiner ist als der Abstand der Hauptlenker in ihrer Verbindung zum Hauptlager einerseits und zum Zwischenlenker andererseits. Der der vorderen Anlenkung zum Hauptlager zugeordnete Hauptlenker ist bevorzugt mit dem Zwischenlenker über einen Verbindungslenker antriebsverbunden, der bei geschlossenem Hardtop in seiner Erstreckung etwa richtungsgleich zu den Hauptlenkern verläuft, wobei der der vorderen Anlenkung des Hauptlagers zugeordnete Hauptlenker bevorzugt als zweiarmiger Hebel ausgebildet ist und mit seinem kürzeren, vom Hardtop abgelegenen Arm mit dem Verbindungslenker verbunden ist.

Der Antrieb der Lenkerkinematik ist im Rahmen der Erfindung dem über die vordere Anlenkung des Hauptlagers karosserieseitig angebundenen Hauptlenker zugeordnet, und zwar bevorzugt dessen dem Verbindungslenker zugeordneten Hebelarm. Im Rahmen der Erfindung liegt es aber auch, als Antrieb einen Drehantrieb vorzusehen, der dem angetriebenen Hauptlenker in seinem zum Hauptlager gegebenen Hauptlagerpunkt zugeordnet ist.

Weitere Einzelheiten und Merkmale der Erfindung ergeben sich aus den Ansprüchen. Ferner wird die Erfindung nachstehend anhand eines Ausführungsbeispieles erläutert, das in den Fig. 1 bis 5 die Lenkerkinematik des Hardtops in Verbindung mit verschiedenen Stellungen des Hardtops veranschaulicht.

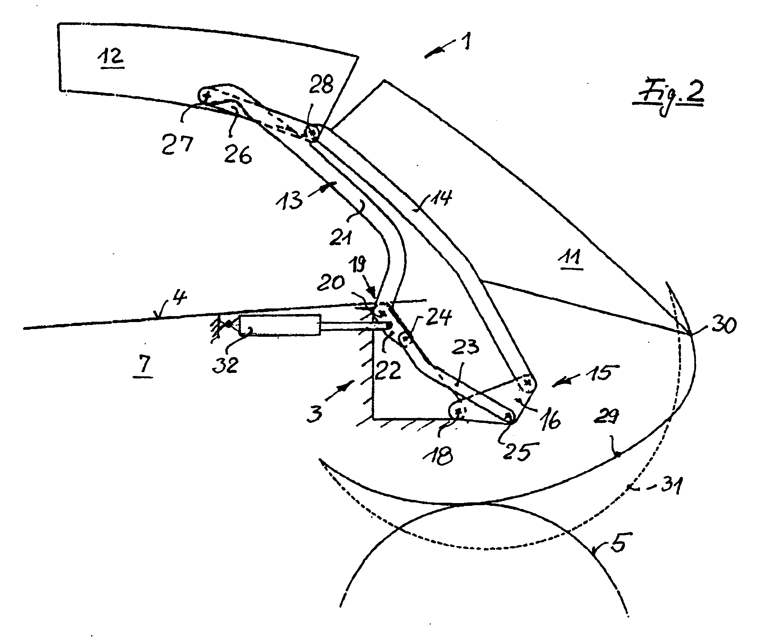

Der in den Fig. 1 bis 5 in schematisierter Seitenansicht dargestellte Teilbereich eines Personenkraftwagens mit offenem Aufbau zeigt lediglich den durch ein Hardtop 1 gebildeten Dachteil mit der dem Hardtop 1 zugeordneten Lenkerkinematik 2 und deren karosserieseitiger Anbindung in einem Hauptlager 3, das zur angedeuteten Gürtellinie 4 des Fahrzeuges nach unten versetzt ist und oberhalb des angedeuteten Radhauses 5 (Fig. 2 bis 5) im vorderen Bereich einer Verdeckablage 6 liegt, die, wie in Fig. 5 veranschaulicht, zwischen einem bezogen auf die Fahrtrichtung F davor liegenden Insassenraum 7 und einem dahinter liegenden Kofferraum 8 liegt, oder auch einen Teil desselben bildet, wobei dem Kofferraum 8 ein bezogen auf eine reale oder virtuelle Schwenkachse 9 nach hinten oben aufschwenkbarer Kofferraumdeckel 10 zugeordnet ist. Bei geöffnetem, also nach hinten oben aufgeschwenktem Kofferraumdeckel 10 kann das zum Paket zusammengefaltete Hardtop 1 in die Verdeckablage 6 abgesenkt bzw. aus dieser herausgeschwenkt werden, und in der herausgeschwenkten Schließlage gemäß Fig. 1 überdeckt das Hardtop 1 den Insassenraum 7.

Im Ausführungsbeispiel ist das Hardtop 1 als zweiteiliges Hardtop dargestellt, das einen hinteren Dachteil 11 und einen anschließend davor liegenden, vorderen Dachteil 12 aufweist. In bekannter Weise kann das Hardtop 1 aber auch noch weitere Dachteile aufweisen, die anschließend an den vorderen Dachteil 12 in bekannter Weise mit diesem verbunden sind, wobei der vordere Dachteil 12 oder etwa anschließend davor liegende, nicht gezeigte Dachteile in der Schließlage des Hardtops 1 mit dem Windlauf einer Windschutzscheibe verbunden sind. Der Radlauf 5 ist einem Rad einer Hinterachse des Fahrzeuges zugeordnet, das in üblicher Weise bezüglich der hier gezeigten Teile symmetrisch zur Längsmittelebene gestaltet ist, so dass die Dachteile 11 und 12 je Fahrzeugseite jeweils eine gezeigte Lenkerkinematik 2 mit Hauptlager 3 aufweisen.

Die Lenkerkinematik 2 umfasst zwei Hauptlenker 13, 14, von denen der Hauptlenker 14 in Zuordnung zum hinteren Dachteil 11 den C-Säulenlenker bildet und über eine hintere Anlenkung 15 mit dem Hauptlager 3 verbunden ist. Die hintere Anlenkung 15 umfasst als Verbindung zwischen dem Hauptlenker 14 und dem Hauptlager 3 einen Zwischenlenker 16, der zum Hauptlenker 14 im Verbindungspunkt 17 schwenkbar verbunden ist und der im Hauptlagerpunkt 18 schwenkbar am Hauptlager 3 angelenkt ist. Der Hauptlenker 13 ist über eine vordere Anlenkung 19 mit dem Hauptlager 3 verbunden, der einen Hauptlagerpunkt 20 aufweist, der zum Hauptlager 3, wie der Hauptlagerpunkt 18, lagefest ist.

Bezogen auf den Hauptlagerpunkt 20 des Hauptlagers 3 als lagefeste Abstützung ist der Hauptlenker 13 als zweiarmiger Hebel mit den Hebelarmen 21 und 22 gestaltet, von denen der Hebelarm 22 sich nach der vom Hardtop 1 abgelegenen Seite erstreckt und über einen Verbindungslenker 23 mit dem Zwischenlenker 16 verbunden ist, wobei die jeweiligen Verbindungspunkte mit 24 und 25 bezeichnet sind und durch Schwenklager gebildet sind. Beide Hauptlenker 13, 14 sind dachseitig am vorderen Dachteil 12 angelenkt, wobei diese Verbindung durch eine dem vorderen Dachteil 12 zugeordnete Koppel 26 veranschaulicht ist, an der der Hauptlenker 13 im Anlenkpunkt 27 und der Hauptlenker 14 im Anlenkpunkt 28 angreift.

Die Hauptlenker 13 und 14 verlaufen, bezogen auf ihre karosserie- und dachseitigen Anschlusspunkte in der Schließlage des Hardtops 1 verbindende Geraden, etwa parallel zueinander, wobei bezüglich des Hauptlenkers 13 auch der Hebelarm 22 eine entsprechende Erstreckung aufweist und in der Ausgangslage gemäß Fig. 1 für den Verbindungslenker 23, bezogen auf eine dessen Verbindungspunkte 24 und 25 verbindende Gerade, eine im Wesentlichen gleiche Erstreckung gegeben ist, so dass der Verbindungslenker 23 den Zwischenlenker 16 kreuzt. Der Verbindungspunkt 25 des Verbindungslenkers 23 zum Zwischenlenker 16 liegt an der Spitze eines im Ausführungsbeispiel angenähert gleichschenkligen Dreiecks, dessen Basis durch die die Punkte 17 und 18 verbindende Gerade gebildet ist. Zur Verbindungsgeraden zwischen den Verbindungspunkten 18 und 25 erstreckt sich der Verbindungslenker 23 schräg nach vorne oben, wobei der eingeschlossene Winkel als spitzer Winkel im Ausführungsbeispiel kleiner als 45° ist, bevorzugt etwa bei 30° bis 40° liegt.

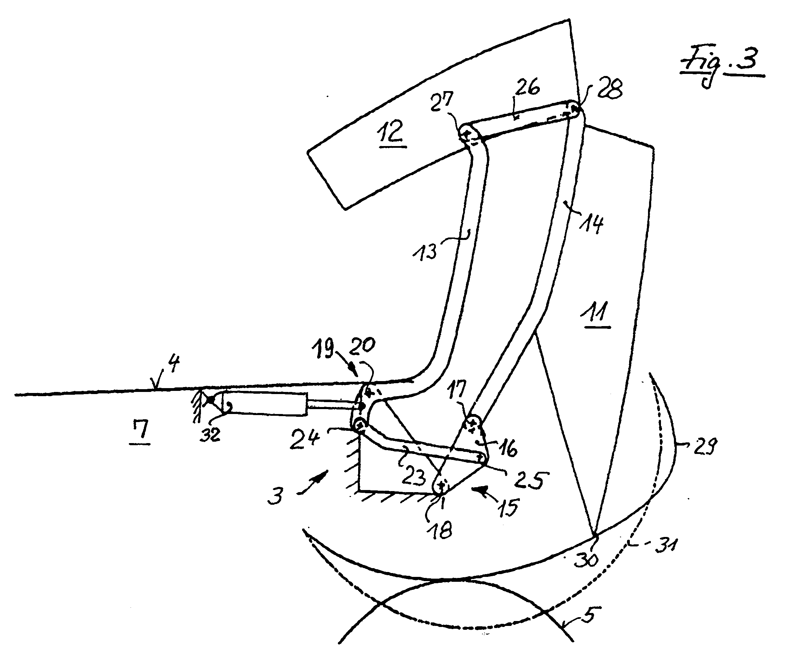

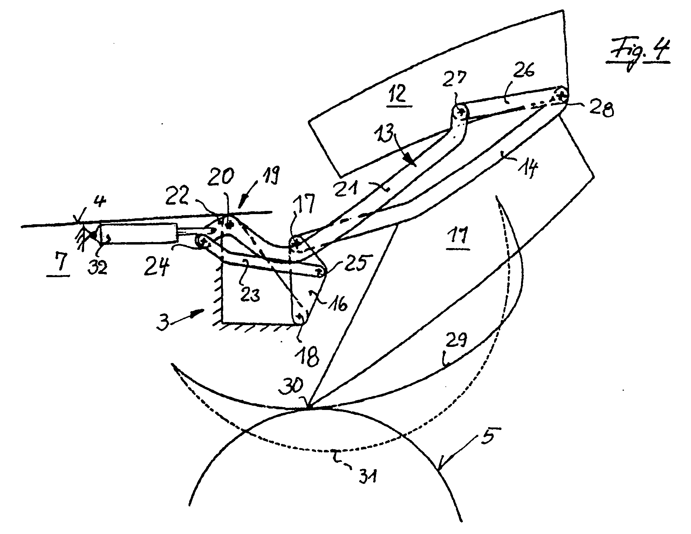

Die Figuren zeigen ausgehend von der Schließstellung des Hardtops 1 gemäß Fig. 1 verschiedene Öffnungsstellungen, wobei Fig. 2 die etwa 10%ige, Fig. 3 die etwa 25%ige und Fig. 4 die etwa 70%ige Öffnung des Hardtops 1 zeigen, während in Fig. 5 bei 100%iger Öffnungsstellung des Hardtops 1 dessen Ablagestellung veranschaulicht ist. In Verbindung mit den verschiedenen Öffnungsstellungen ist die Bewegungsbahn 29 des hinteren unteren Eckbereiches 30 des hinteren Dachteiles 11 als Volllinie eingetragen, und in Vergleich hierzu strichliert eine Bewegungsbahn 31, wie sie vom hinteren Eckbereich 30 beschrieben würde, wenn der den C-Säulenlenker bildende Hauptlenker 14 lagefest am Hauptlager 3 gelagert wäre. Insbesondere Fig. 3 bis 5 veranschaulichen, dass erst durch die Erfindung eine gegenüber dem Radhaus 5 überschneidungsfreie Bewegung erreichbar ist, wobei die erfindungsgemäße Ausgestaltung zugleich auch, wie Fig. 5 zeigt, zu einer sehr kompakten Staulage führt.

Für den Verbindungslenker 23 zeigen die Darstellungen gemäß Fig. 1 bis 5, dass dieser von seiner in der Schließlage des Hardtops 1 gemäß Fig. 1 in Richtung auf den Hauptlagerpunkt 18 des Zwischenlenkers 16 geneigten Lage beim Öffnen des Hardtops 1 über eine zur Verbindungsgeraden der Punkte 17 und 18 senkrechten Lage in eine Lage schwenkt, in der er in Richtung auf den Verbindungspunkt 17 des Hauptlenkers 14 zum Zwischenlenker 16 geneigt ist, wobei in den beiden Endlagen gemäß Fig. 1 und 5 etwa gleich große Winkelabweichungen zur Mittellage gegeben sind. Grundsätzlich kann die Anlenkung des Verbindungslenkers 23 statt am Zwischenlenker 16 auch am Hauptlenker 14 vorgesehen sein.

Für den Antrieb der Lenkerkinematik 2 erweist es sich als vorteilhaft, diese dem Hauptlenker 13 zuzuordnen, wobei eine solche Antriebsanordnung durch einen Stellzylinder 32 symbolisiert ist, der am Hebelarm 22 angreift, und zwar bevorzugt unter Vermittlung eines nicht gezeigten, zwischen dem Hebelarm 22 und der Kolbenstange des Stellzylinders 32 angeordneten Umlenkgetriebes, das günstige Kraftübertragungsverhältnisse auch bei nahe der Gürtellinie 4 in Fahrzeuglängsrichtung sich erstreckendem Stellzylinder 32 ermöglicht.

Für die angestrebte Ablaufsteuerung beim Öffnen und Schließen des Hardtops erweist sich die geschilderte, bei geschlossenem Hardtop 1 etwa richtungsgleiche Erstreckung des Hebelarmes 22 und des Verbindungslenkers 23 als vorteilhaft, da hierdurch der Hauptlenker 13 beim Einleiten der Öffnungsbewegung des Daches seine Lage im Wesentlichen beibehält und über den Hebelarm 22 nur geringfügig angehoben oder auch abgesenkt wird, und zwar in Abhängigkeit davon, ob der Verbindungspunkt 24 unterhalb oder oberhalb der Verbindungsgeraden der Verbindungspunkte 24 und 25 liegt. Hierdurch wird ein unerwünscht tiefes Eintauchen der Dachvorderkante verhindert.

Im weiteren Verlauf der Dachöffnungsbewegung entsteht durch die Drehung des Hauptlenkers 13 mit dem Hebelarm 22 bezüglich der Wirkrichtung des Verbindungslenkers 23 ein wirksamer Hebel um den Hauptlagerpunkt 20, und der Verbindungslenker 23 zieht den Zwischenlenker 16 um dessen Hauptlagerpunkt 18 als Drehpunkt nach oben.

Der zunächst relativ spitze Winkel zwischen dem Verbindungslenker 23 und der Verbindungsgeraden zwischen dem Hauptlagerpunkt 18 des Zwischenlenkers 16 sowie dem Verbindungspunkt 25 des Verbindungslenkers 23 zum Zwischenlenker 16 hat zur Folge, dass sich der Zwischenlenker 16 beim weiteren Öffnen, vgl. Fig. 2 und 3, zunächst verhältnismäßig schnell aufrichtet, d. h. nach vorne oben schwenkt. Danach bleibt die Höhenlage des Verbindungspunktes 17 des Zwischenlenkers 16 zum Hauptlenker 14, also die Z-Position des Verbindungspunktes 17, weitgehend erhalten. Die Fig. 3 bis 5 veranschaulichen die nur noch geringe Veränderung dieser Höhenlage, was daraus folgt, dass der wirksame Hebel des Hebelarmes 22 wieder abnimmt und gleichzeitig der Winkel zwischen dem Verbindungslenker 23 und der Verbindungsgeraden zwischen den Punkten 18 und 25 nunmehr in der Größenordnung von etwa 90° liegt. Entsprechend ergibt sich für den Verbindungspunkt 17 zwischen Zwischenlenker 16 und Hauptlenker 14 eine nur noch geringe, und weitgehend in Fahrzeuglängsrichtung, also in X-Richtung orientierte Bewegung. Dies mit der Folge, dass für die Schwenkung der C-Säule (Hauptlenker 14) über das Radhaus 5 ein hinreichend großes Zeitfenster gegeben ist.

## Patentansprüche

1. Lenkerkinematik (2) für ein Fahrzeug-Hardtop (1), das einen hinteren Dachteil (11) und zumindest einen anschließend davor liegenden, vorderen Dachteil (12) aufweist und dessen Lenkerkinematik (2) ein karosserieseitiges Hauptlager (3) mit in Fahrzeuglängsrichtung versetzten Anlenkungen(15, 19) für zwei Hauptlenker (13, 14) umfasst, wobei in der Anlenkung (15) eines Hauptlenkers (14) zum Hauptlager (3) ein Zwischenlenker (16) vorgesehen ist, eine einen Verbindungslenker (23) umfassende Antriebsverbindung zwischen beiden Hauptlenkern (13, 14) gegeben ist, beide Hauptlenker (13, 14) dachseitig Anschlüsse zum vorderen Dachteil (12) aufweisen und wobei der über die hintere der in Fahrzeuglängsrichtung versetzten Anlenkungen (15, 19) mit dem Hauptlager (3) verbundene Hauptlenker (14) als C-Säulenlenker dem hinteren Dachteil (11) zugeordnet ist,
**dadurch gekennzeichnet,**
**dass** der Zwischenlenker (16) in der Anlenkung (15) des den C-Säulenlenker bildenden Hauptlenkers (14) zum Hauptlager (3) vorgesehen ist.

2. Lenkerkinematik nach Anspruch 1,
**dadurch gekennzeichnet,**
**dass** die in Fahrzeuglängsrichtung versetzten Anlenkungen (15, 19) der Hauptlenker (13, 14) am Hauptlager (3) höhenversetzte Hauptlagerpunkte (18, 20) aufweisen.

3. Lenkerkinematik nach Anspruch 2,
**dadurch gekennzeichnet,**
**dass** der der Anlenkung (15) des den C-Säulenlenker bildenden Hauptlenkers (14) zugeordnete Hauptlagerpunkt (18) einen Lagerpunkt des Zwischenlenkers (16) bildet und tiefer liegt als der Hauptlagerpunkt (20) der davor liegenden Anlenkung (19).

4. Lenkerkinematik nach einem der vorhergehenden Ansprüche,
**dadurch gekennzeichnet,**
**dass**, bezogen auf das Fahrzeug-Hardtop (1) in geschlossener Lage, der Zwischenlenker (16) sich ausgehend von seinem Hauptlagerpunkt (18) nach hinten erstreckt.

5. Lenkerkinematik nach Anspruch 4,
**dadurch gekennzeichnet,**
**dass**, bezogen auf das Fahrzeug-Hardtop (1) in geschlossener Lage, der Zwischenlenker (16) sich ausgehend von seinem Hauptlagerpunkt (18) schräg nach hinten oben erstreckt.

6. Lenkerkinematik nach Anspruch 4 oder 5,
**dadurch gekennzeichnet,**
**dass**, bezogen auf das Fahrzeug-Hardtop (1) in geschlossener Lage, der Verbindungspunkt (17) des den C-Säulenlenker bildenden Hauptlenkers (14) zum Zwischenlenker (16) tiefer liegt als der Hauptlagerpunkt (20) des der davor liegenden Anlenkung (19) zugeordneten Hauptlenkers (13).

7. Lenkerkinematik nach einem der vorhergehenden Ansprüche,
**dadurch gekennzeichnet,**
**dass**, bezogen auf das Fahrzeug-Hardtop (1) bei geschlossener Lage, der Verbindungslenker (23) und der den C-Säulenlenker bildende Hauptlenker (14), bezogen auf die Verbindungsgeraden ihrer jeweiligen Anlenk- und/oder Verbindungspunkte (24, 25; 17, 28) gleichgerichtet verlaufen.

8. Lenkerkinematik nach einem der vorhergehenden Ansprüche,
**dadurch gekennzeichnet,**
**dass** der über die vordere Anlenkung (19) mit dem Hauptlager (3) verbundene Hauptlenker (13) und der Verbindungslenker (23), bezogen auf die Verbindungsgeraden ihrer jeweiligen Anlenk-und/oder Verbindungspunkte (20, 27; 24,25) bei geschlossenem Hardtop (1), sich richtungsgleich erstrecken.

9. Lenkerkinematik nach einem der vorhergehenden Ansprüche,
**dadurch gekennzeichnet,**
**dass** der über die vordere Anlenkung (19) mit dem Hauptlager (3) verbundene Hauptlenker (13) als zweiarmiger Hebel ausgebildet ist, dessen einer vom Dachteil (12) abgelegene Hebelarm (22) an den Verbindungslenker (23) angeschlossen ist.

10. Lenkerkinematik nach Anspruch 9,
**dadurch gekennzeichnet,**
**dass** der an den Verbindungslenker (23) angeschlossene Hebelarm (22) des Hauptlenkers (13) und der Verbindungslenker (23) bei geschlossenem Hardtop (1) sich richtungsgleich erstrecken.

11. Lenkerkinematik nach einem der Ansprüche 1 bis 10,
**dadurch gekennzeichnet,**
**dass** der in der Antriebsverbindung der beiden Hauptlenker (13, 14) liegende Verbindungslenker (23) seitens des den C-Säulenlenker bildenden Hauptlenkers (14) am Zwischenlenker (16) angelenkt ist.

12. Lenkerkinematik nach einem der vorhergehenden Ansprüche,
**dadurch gekennzeichnet,**
**dass** der Verbindungslenker (23), bezogen auf das Fahrzeug-Hardtop in geschlossener Lage, quer zum Zwischenlenker (16) verläuft und mit seinem Verbindungspunkt (25) zum Zwischenlenker (16) auf Höhe des dem Zwischenlenker (16) zugeordneten Hauptlagerpunktes (18) liegt.

13. Lenkerkinematik nach einem der Ansprüche 9 bis 12,
**dadurch gekennzeichnet,**
**dass** bei geschlossenem Hardtop (1) der Verbindungslenker (23) und die Verbindungsgerade zwischen dem dem Zwischenlenker (16) zugeordneten Hauptlagerpunkt (18) und dem Verbindungspunkt (25) des Verbindungslenkers (23) zum Zwischenlenker (16) unter einem spitzen Winkel zueinander stehen.

14. Lenkerkinematik nach einem der vorhergehenden Ansprüche,
**dadurch gekennzeichnet,**
**dass** von den Hauptlenkern (13, 14) der Lenkerkinematik der im Verbindungspunkt (17) mit dem den C-Säulenlenker bildenden, bezogen auf die Fahrzeuglängsrichtung hinteren Hauptlenker (14) verbundene Zwischenlenker (16) bei der Umstellung des Hardtops zwischen dessen Schließ- und Ablagestellung jeweils in Gegenrichtung zum vorderen Hauptlenker (13) schwenkt.

## Claims

1. Rod kinematics (2) for a hardtop (1) of a vehicle which comprises a rear roof part (11) and at least one front roof part (12) located adjacent in front and the rod kinematics (2) thereof comprising a main bearing (3) on the bodywork side with couplings (15, 19), offset in the longitudinal direction of the vehicle, for two main rods (13, 14), an intermediate rod (16) being provided at the coupling (15) of a main rod (14) to the main bearing (3), a drive connection comprising a connecting rod (23) being provided between the two main rods (13, 14), the two main rods (13, 14) on the roof side comprising connections to the front roof part (12) and the main rod (14) connected to the main bearing (3) via the rear couplings (15, 19) offset in the longitudinal direction of the vehicle being associated as a C-pillar rod with the rear roof part (11), **characterized in that** the intermediate rod (16) is provided at the coupling (15) of the main rod (14) forming the C-pillar rod to the main bearing (3).

2. Rod kinematics according to Claim 1, **characterized in that** the couplings (15, 19) of the main rods (13, 14) offset in the longitudinal direction of the vehicle, comprise main bearing points (18, 20) which are offset in height on the main bearing (3).

3. Rod kinematics according to Claim 2, **characterized in that** the main bearing point (18) associated with the coupling (15) of the main rod (14) forming the C-pillar rod, forms a bearing point of the intermediate rod (16) and is located lower than the main bearing point (20) of the coupling (19) located in front.

4. Rod kinematics according to one of the preceding claims, **characterized in that** relative to the hardtop (1) of a vehicle in the closed position, the intermediate rod (16) extends to the rear from its main bearing point (18).

5. Rod kinematics according to Claim 4, **characterized in that** relative to the hardtop (1) of a vehicle in the closed position, the intermediate rod (16) extends from its main bearing point (18) obliquely to the rear upwardly.

6. Rod kinematics according to Claim 4 or 5, **characterized in that**, relative to the hardtop (1) of a vehicle in the closed position, the connection point (17) of the main rod (14) forming the C-pillar rod to the intermediate rod (16) is located lower than the main bearing point (20) of the main rod (13) associated with the coupling (19) located in front.

7. Rod kinematics according to one of the preceding claims, **characterized in that**, relative to the hardtop (1) of a vehicle in the closed position, the connecting rod (23) and the main rod (14) forming the C-pillar rod, relative to the straight lines connecting their respective coupling and/or connection points (24, 25; 17, 28), extend in the same direction.

8. Rod kinematics according to one of the preceding claims, **characterized in that** the main rod (13) connected via the front coupling (19) to the main bearing (3) and the connecting rod (23), relative to the straight lines connecting their respective coupling and/or connection points (20, 27; 24, 25), when the hardtop (1) is closed, extend in the same direction.

9. Rod kinematics according to one of the preceding claims, **characterized in that** the main rod (13) connected to the main bearing (3) via the front coupling (19) is configured as a two-armed lever, one lever arm (22) thereof remote from the roof part (12) being attached to the connecting rod (23).

10. Rod kinematics according to Claim 9, **characterized in that** the lever arm (22) of the main rod (13) attached to the connecting rod (23) and the connecting rod (23) extend in the same direction when the hardtop (1) is closed.

11. Rod kinematics according to one of Claims 1 to 10, **characterized in that** the connecting rod (23) operatively connected to the two main rods (13, 14) is coupled to the intermediate rod (16) by the main rod (14) forming the C-pillar rod.

12. Rod kinematics according to one of the preceding claims, **characterized in that**, relative to the hardtop of a vehicle in the closed position, the connecting rod (23) extends transversely to the intermediate rod (16) and with its connection point (25) to the intermediate rod (16) is located level with the main bearing point (18) associated with the intermediate rod (16).

13. Rod kinematics according to one of Claims 9 to 12, **characterized in that** when the hardtop (1) is closed, the connecting rod (23) and the straight lines between the main bearing point (18) associated with the intermediate rod (16) and the connection point (25) of the connecting rod (23) to the intermediate rod (16) are located at an acute angle to one another.

14. Rod kinematics according to one of the preceding claims, **characterized in that** by the main rods (13, 14) of the rod kinematics, the intermediate rod (16) connected at the connection point (17) to the rear main rod (14) forming the C-pillar rod relative to the longitudinal direction of the vehicle, pivots during the displacement of the hardtop between the closed and stored position thereof, respectively in the direction counter to the front main rod (13).

## Revendications

1. Cinématique de direction (2) pour un toit rigide
(1) d'un véhicule, qui présente une partie de toit arrière (11) et au moins une partie de toit avant (12) en avant de celle-ci, et dont la cinématique de direction (2) comprend un palier principal (3) du côté de la carrosserie avec des articulations (15, 19) pour deux bras de direction principaux (13, 14) décalées dans la direction longitudinale du véhicule, un bras de direction intermédiaire (16) étant prévu dans l'articulation (15) d'un bras de direction principal (14) avec le palier principal (3), une connexion d'entraînement entre les deux bras de direction principaux (13, 14) comprenant un bras de direction de connexion (23) étant prévue, les deux bras de direction principaux (13, 14) présentant du côté du toit des raccordements à la partie de toit avant (12) et le bras de direction principal (14) connecté au palier principal (3) par le biais des articulations arocière des articulations (15, 19) décalées dans la direction longitudinale du véhicule étant associé en tant que bras de direction de la colonne C à la partie de toit arrière (11),
**caractérisée en ce que**
le bras de direction intermédiaire (16) est prévu dans l'articulation (15) du bras de direction principal (14), formant le bras de direction de la colonne C, au palier principal (3).

2. Cinématique de direction selon la revendication 1,
**caractérisée en ce que**
les articulations (15, 19) des bras de direction principaux (13, 14), décalées dans la direction longitudinale du véhicule, présentent des points d'appui principaux (18, 20) décalés en hauteur sur le palier principal (3).

3. Cinématique de direction selon la revendication 2,
**caractérisée en ce que**
le point d'appui principal (18) associé à l'articulation (15) du bras de direction principal (14) formant le bras de direction de la colonne C forme un point d'appui du bras de direction intermédiaire (16) et est plus bas que le point d'appui principal (20) de l'articulation (19) située plus en avant.

4. Cinématique de direction selon l'une quelconque des revendications précédentes,
**caractérisée en ce que**
par rapport au toit rigide (1) du véhicule dans la position fermée, le bras de direction intermédiaire (16) s'étend vers l'arrière depuis son point d'appui principal (18).

5. Cinématique de direction selon la revendication 4,
**caractérisée en ce que**
par rapport au toit rigide (1) du véhicule dans la position fermée, le bras de direction intermédiaire (16) s'étend obliquement vers l'arrière et vers le haut depuis son point d'appui principal (18).

6. Cinématique de direction selon la revendication 4 ou 5,
**caractérisée en ce que**
par rapport au toit rigide (1) du véhicule dans la position fermée, le point de connexion (17) du bras de direction principal (14) formant le bras de direction de la colonne C au bras de direction intermédiaire (16) est plus bas que le point d'appui principal (20) du bras de direction principal (13) associé à l'articulation (19) située en avant.

7. Cinématique de direction selon l'une quelconque des revendications précédentes,
**caractérisée en ce que**
par rapport au toit rigide (1) du véhicule dans la position fermée, le bras de direction de connexion (23) et le bras de direction principal (14) formant le bras de direction de la colonne C s'étendent dans la même direction par rapport à la droite de connexion de leurs points d'articulation et/ou de connexion respectifs (24, 25 ; 17, 28).

8. Cinématique de direction selon l'une quelconque des revendications précédentes,
**caractérisée en ce que**
le bras de direction principal (13) connecté au palier principal (3) par le biais de l'articulation avant (19), et le bras de direction de connexion (23), par rapport à la droite de connexion de leurs points d'articulation et/ou de connexion respectifs (20, 27 ; 24, 25), s'étendent dans la même direction lorsque le toit rigide (1) est fermé.

9. Cinématique de direction selon l'une quelconque des revendications précédentes,
**caractérisée en ce que**
le bras de direction principal (13) connecté au palier principal (3) par le biais de l'articulation avant (19) est réalisé sous forme de levier à deux bras, dont un bras de levier (22) éloigné de la partie de toit (12) est raccordé au bras de direction de connexion (23).

10. Cinématique dé direction selon la revendication 9,
**caractérisée en ce que**
le bras de levier (22) du bras de direction principal (13), raccordé au bras de direction de connexion (23), et le bras de direction de connexion (23), s'étendent dans la même direction lorsque le toit rigide (1) est fermé.

11. Cinématique de direction selon l'une quelconque des revendications 1 à 10,
**caractérisée en ce que**
le bras de direction de connexion (23) situé dans la connexion d'entraînement des deux bras de direction principaux (13, 14) est articulé au bras de direction intermédiaire (16) du côté du bras de direction principal (14) formant le bras de direction de la colonne C.

12. Cinématique de direction selon l'une quelconque des revendications précédentes,
**caractérisée en ce que**
le bras de direction de connexion (23), par rapport au toit rigide du véhicule dans la position fermée, s'étend transversalement au bras de direction intermédiaire (16) et se situe avec son point de connexion (25) au bras de direction intermédiaire (16) à la hauteur du point d'appui principal (18) associé au bras de direction intermédiaire (16).

13. Cinématique de direction selon l'une quelconque des revendications 9 à 12,
**caractérisée en ce que**,
lorsque le toit rigide (1) est fermé, le bras de direction de connexion (23) et la droite de connexion entre le point d'appui principal (18) associé au bras de direction intermédiaire (16) et le point de connexion (25) du bras de direction de connexion (23) au bras de direction intermédiaire (16) sont orientés suivant un angle aigu l'un par rapport à l'autre.

14. Cinématique de direction selon l'une quelconque des revendications précédentes,
**caractérisée en ce que**
le bras de direction intermédiaire (16) connecté au niveau du point de connexion (17) au bras de direction principal (14) arrière par rapport à la direction longitudinale du véhicule, formant le bras de direction de la colonne C, pivote depuis les bras de direction principaux (13, 14) de la cinématique de direction lors de transfert du toit rigide entre sa position de fermeture et sa position de rangement, à chaque fois dans le sens opposé au bras de direction principal avant (13).
